# EUROPEAN PATENT SPECIFICATION

(11) **EP 2 224 680 B1**
(45) Date of publication and mention of the grant of the patent: **18.05.2011**
(21) Application number: 09153991.6
(22) Date of filing: 27.02.2009
(51) Int. Cl.: H04L 29/08, H04W 4/06, G06Q 30/00, H04L 12/58, H04L 29/06

(54) **communications system providing personalized mobile wireless communications device notifications and related methods**
Kommunikationssystem mit einer personalisierten mobilen Funkkommunikationsvorrichtungsnachrichten und zugehörige Verfahren
Système de communications fournissant des notifications à un dispositif de communications sans fil mobile et procédés correspondants

(43) Date of publication of application: 01.09.2010
(73) Proprietor: RESEARCH IN MOTION LIMITED, Waterloo, Ontario N2L 3W8 (CA)
(72) Inventor: Bosan, Sorel, Waterloo Ontario N2L 3L3 (CA); Zima, Janice, Waterloo Ontario N2L 3L3 (CA); Brown, Michael K., Waterloo Ontario N2L 3L3 (CA)
(74) Representative: Roberts, Gwilym Vaughan

(56) References cited:
- US-A1- 2003 208 588
- US-A1- 2004 083 271
- US-A1- 2005 282 556
- US-B1- 7 020 460

## Description

### Technical Field

The present disclosure relates to the field of communications systems, and, more particularly, to mobile wireless communications systems and related methods.

### Background

Mobile communications systems continue to grow in popularity and have become an integral part of both personal and business communications. Mobile telephones allow users to place and receive voice calls most anywhere they travel. Moreover, as mobile telephone technology has increased, so too has the functionality of cellular devices and the different types of devices available to users. For example, many mobile devices now incorporate personal digital assistant (PDA) features such as calendars, address books, task lists, etc. Moreover, such multi-function devices may also allow users to tirelessly send and receive electronic mail (email) messages and access the Internet via a cellular network and/or a wireless local area network (WLAN), for example.

As a result, users continue to spend more time using their mobile devices during the course of a day, as opposed to early cellular phones that were used only for phones calls. This has resulted in a significant interest from the advertising community in targeting advertisements to mobile devices.

One exemplary system for directing targeted advertising or transmitting information to end users, using wireless or mobile media, including cellular media, is disclosed in U.S. Patent Pub. No. 2007/0055565.
The system interconnects (a) advertisers or sponsors, (b) wireless device users ("system users"), and (c) wireless telecommunications companies ("telecoms"), via (d) an intermediary or "hub entity." The hub entity maintains and controls computer operated software and data bases to direct specific advertising or information to targeted system users, collects subscription fees and distributes advertising fees, and determines the effectiveness of various advertising or information transmitted to specific system users.
U.S. Patent Application Publication No. 2003/0208588 to Segal provides systems and methods for gathering information about a person, maintaining this information within a protective zone that is isolated from third parties, maintaining the identities of available third party data content, producing a set of identified targeted third party data content based upon the gathered information and the identities of available third party data content, and directing the identified targeted data content to an end user's computer. In this way, detailed private information may be collected and processed within a protective zone to identify targeted data content, such as advertisements, for example, whereby the only information that leaves the protective zone are the requests for the identified targeted data content. These systems and methods can be utilized to obtain targeted third party medically-related data content without compromising one's privacy.
U.S. Patent Application Publication No. 2005/0282556 to Morris discloses, in a first aspect, a method that includes specifying on the electronic device a request for a product or service, and receiving in the electronic device advertising information related to a local merchant from the local merchant and transmitted over a wireless local area network (LAN). The method also includes displaying on the electronic device the advertising information if the product or service offered by the local merchant matches the request, whereby the electronic device collects location sensitive information without requiring the electronic device to specify its location. In a second aspect, the present invention is a system that includes a computer system associated with at least one local merchant that is coupled to the wireless LAN and includes at least one advertiser for transmitting over the wireless LAN advertising information related to each of the at least one local merchants. The system also includes an electronic device that is capable of connecting to the wireless LAN. The electronic device includes a locator for connecting the electronic device to the wireless LAN and for receiving the advertising information transmitted by the computer system associated with the at least one merchant, and a display for displaying the advertising information if the product or service offered by the local merchant matches a request from the electronic device for a product or service.
U.S. Patent Application Publication No. 2004/0083271 to Tosey discloses redirecting a notification to a wireless user device includes registering for notification of incoming messages for an account on a message server, the incoming messages being directed to an account on the message server. The redirecting also includes receiving at least one notification and redirecting the at least one notification through a firewall to a wireless user device associated with the account. The remote message server is in communication with a network protected by the firewall. According to one aspect, a cradle is configured to perform the redirection. According to another aspect, the cradle is associated with a remote desktop computer in communication with the network.
U.S. Patent No. 7,020,460 to Sherman et al. discloses a method for providing a mobile network notification service including receiving a first telephone number associated with a first notification service customer. The method further includes receiving an indication that a first telephone corresponding to the first telephone number has been powered on and is available in a mobile network. A mobile network status of a second telephone corresponding to a second telephone number is determined in response to locating the second telephone number in a notification list associated with the first notification service customer. The status is transmitted to the first notification service customer.

Despite the advantages of such approaches, further functionality may be desirable for providing notifications, such as advertisements, to mobile wireless communications device users.
The invention is defined in the independent claims. Some optional features of the invention are defined in the dependent claims.

### Brief Description of the Drawings

FIG. 1 is a schematic block diagram of a communications system in accordance with one exemplary embodiment.

FIG. 2 is a flow diagram illustrating exemplary communications method embodiments.

FIG. 3 is a schematic block diagram of an alternative embodiment of the system of FIG. 1.

FIG. 4 is a flow diagram illustrating alternative exemplary communications method aspects of the method of FIG. 2.

FIG. 5 is a schematic block diagram of an alternative embodiment of the communications system of FIG. 1.

FIG. 6 is a schematic block diagram illustrating exemplary components of a mobile wireless communications device that may be used for determining vehicle traffic rate or density, or passing pedestrian traffic density, in accordance with exemplary embodiments.
FIG. 7 is a schematic block diagram of yet another alternative embodiment of the communications system of FIG. 1.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

The present application advantageously addresses the technical problem of how to allow notifications, such as advertisements, to be personalized for a known demographic of users, while at the same time providing privacy to users by not disseminating their personal or private information beyond the trusted confines of a protected computing environment. Considered alternatively, the present application addresses the technical problem of how to provide personalized notifications (e.g., advertisements) to mobile wireless communications device users when the notification provider is not permitted access to personal information of the device users.

These technical problems are addressed by a communications system which may include at least one Mobile wireless communications device associated with a respective user, a network server within a protected computer network, and a notification server (e.g., an advertising server) outside of the protected computer network for generating generic notifications (e.g., advertisements). More particularly, the network server may be configured to store for storing within the protected computer network personalizing information for the user of the at least one wireless communications device, receive generic notifications from the notification server, and generate and send to the at least one wireless communications device personalized notifications based upon the personalizing information and the generic notifications.

More particularly, the personalizing information may include a user name, and the network server may generate the personalized notifications by adding the user name to the generic notifications. By way of example, the generic notifications may have at least one target field therein, and the network server may generate the completed notifications by filling the personalizing information in the at least one target field. Additionally, the generic notifications may have at least one key word therein, and the network server may generate the personalized notifications by replacing the at least one key word with the personalizing information.

The network server may further store notification preferences within the protected computer network, and filter the generic notifications based upon the notification preferences. The notification preferences may include user notification preferences, network notification preferences, or both, for example. The network server may further advantageously generate a report of personalized notifications sent to the at least one wireless communications device and send the report to the notification server.

The communications system may also include a computer firewall module connected between the network server and the wide area network to provide the protected computing network. Additionally, the at least one wireless communications device may include a plurality thereof each associated with a respective different user. Furthermore, the at least one wireless communications device may also be for sending and receiving electronic mail (email) messages via the wide area network, and the network server may further reconcile email messages between an email inbox on the at least one wireless communications device and an email inbox within the protected computer network. The network server may communicate with the notification server via a wide area network, such as the Internet, for example.

A related communications method may include storing personalizing information for a user of the at least one wireless communications device within a protected computer network, and receiving generic notifications from a notification server outside of the protected computer network. The method may further include generating and sending to the at least one wireless communications device personalized notifications based upon the personalizing information and the generic notifications.

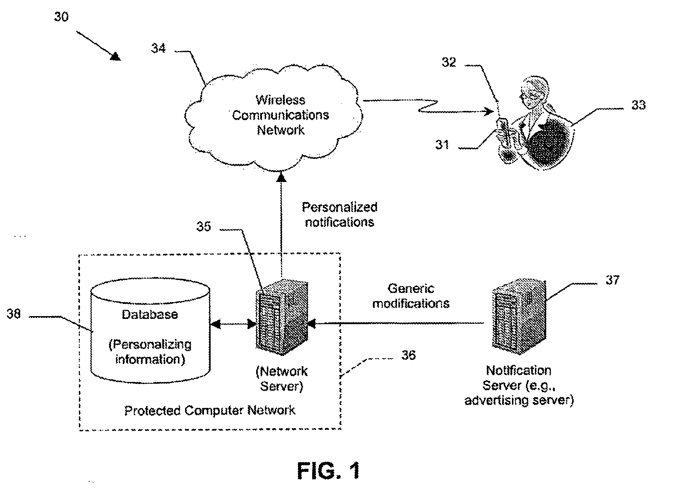

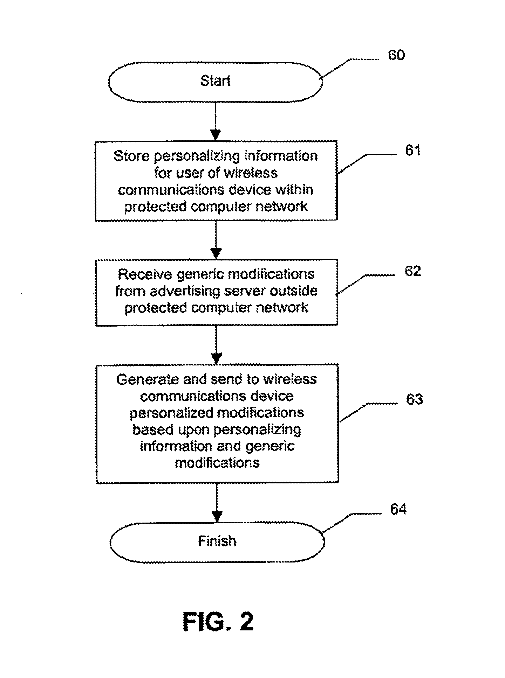

Referring initially to FIGS. 1 and 2, a communications system **30** and associated communications method aspects are first described. The system **30** illustratively includes one or more mobile wireless communications devices **31** and associated antenna **32.** A respective user **33** is associated with the device **31.** Moreover, the system **30** further illustratively includes a wireless communications network **34,** a network server 35 within a protected computer network **36,** and a notification server **37,** which may comprise an advertising server, outside of the protected computer network. However, it should be noted that in different embodiments notifications other than advertisements may be used (e.g., news notifications, etc.)

By way of example, the device **31** and wireless communications network **34** may operate in accordance with a cellular, wireless LAN (e.g., 802.11x, Bluetooth, etc.), WiMAX, satellite, etc., communications format, as will be appreciated by those skilled in the art. In some embodiments, more than one such wireless communications format may be used in the same device (e.g., cellular, wireless LAN, and Bluetooth). Moreover, the device 31 also illustratively includes one or more associated antennas **32.** Various types of mobile wireless communications devices **31** may be used, such as mobile phones, PDAs, laptop computers, wireless-enabled cameras, wireless-enabled media players, etc., for example. Moreover, the wireless communications network **34** (or portions thereof) may also reside within the protected computer network **36,** such as in the case of a wireless LAN, WiMAX, etc., network.

Beginning at Block **60,** the network server **35** may advantageously store within the protected computer network (e.g., in a database **38)** personalizing information for the user **33** of the device **31,** at Block **61.** By way of example, the personalizing information may include a name of the user, as well as other applicable information such as title (e.g., Mr., Mrs., Ms., etc.), occupation, degrees, residence information, age or age group, race or ethnicity, gender, income or income bracket, geographic location, political affiliation, religion, marital status, number of children, etc. Moreover, additional information may be stored in the database **38** as well, such as advertising preference information. More particularly, the advertising preference information may include preferences of the user (e.g., the types of products or services, or both, the user is interested (or not interested) in), such as restaurants, songs, recording artistes, actors, movies, TV shows, books, authors, etc. In some embodiments, network advertising preferences may additionally (or instead) be stored as well, such as what types of advertisements may or may not (or both) be communicated to user devices **31,** as will be discussed further below.

By way of example, the network server **35** and database **38** may be implemented using a combination of hardware (e.g., microprocessor, memory, etc.) and software components or modules. Moreover, the various functions of the network server **36** and database **38** may be implemented in a single server or database, or implemented using multiple different servers and databases, as will also be appreciated by those skilled in the art.

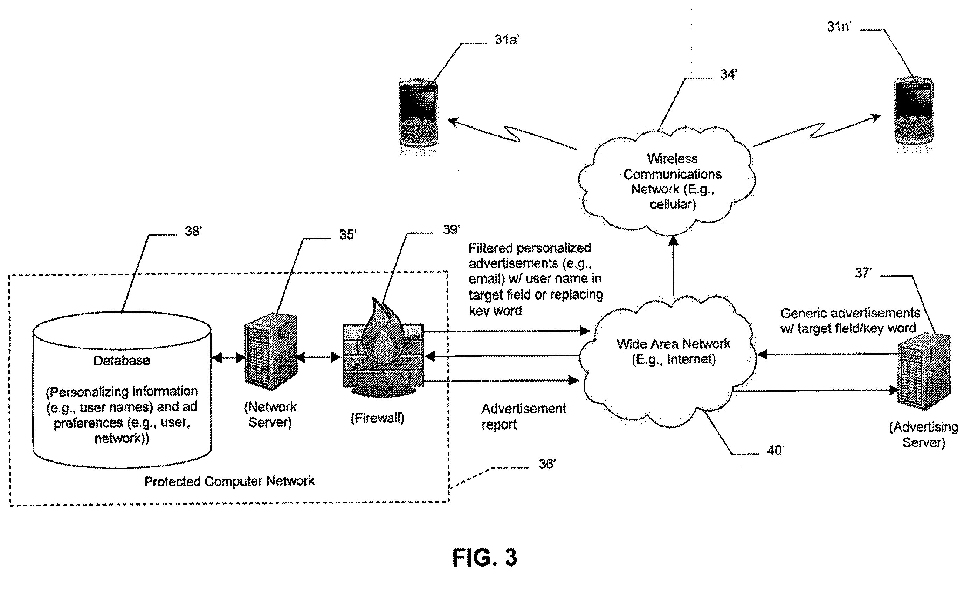

The advertising server **37** is for generating generic advertisements to be received by the network server **35,** at Block **62.** More particularly, the generic advertisements may be of a general nature and not specifically addressed to, targeted to, tailored to, or otherwise personalized for any particular user. However, these advertisements may advantageously be generated with a "placeholder" to allow for later personalization, such as a target field(s) or key word(s) that can later be filled in with or replaced by the personalizing information to generate personalized advertisement for sending to the user(s) **33,** at Block **63,** thus concluding the method illustrated method in FIG. 3 (Block **64**).

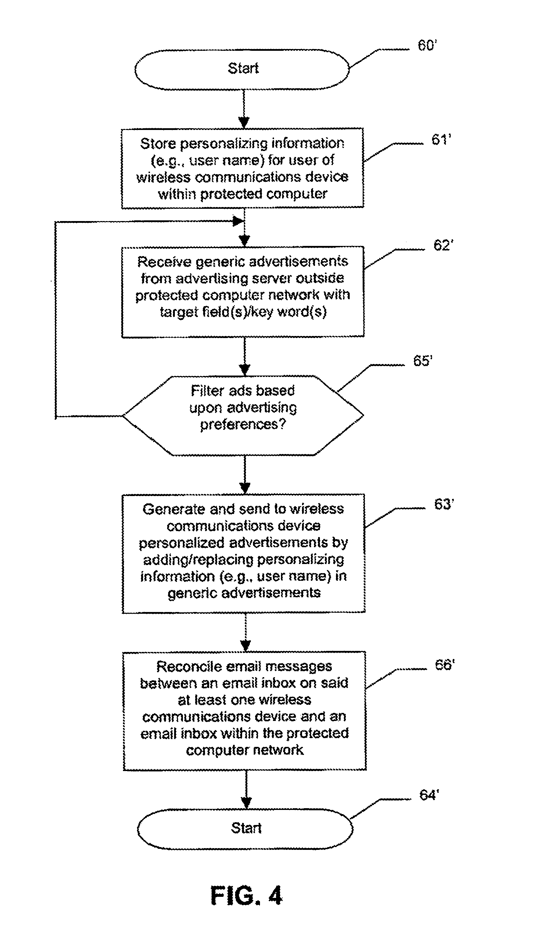

Taking the example of a written text advertisement, such as in the form of an electronic mail (email) message, a target field may be a tag (e.g., an extensible markup language (XML) tag) or other identifier within the email message that identifies where the user's name, title, etc., is to be inserted. As such, upon receiving a generic advertisement from the advertising server **37,** the network server **35** searches and replaces the target field(s) therein with the corresponding personalizing information of the user(s) **33** to which a personalized advertisement is to be sent (Block **63',** FIG. 4). In the example of a key word, the generic advertisement email message may include a generic greeting of "Dear Customer," which phrase the network server **35** may replace with "Dear Jason," for a user named Jason, etc. Moreover, the advertisements need not be text only, and may include other items (e.g., images) in addition to, or instead of, text, as will be appreciate by those skilled in the art. Combinations of these two approaches may be used in some embodiments, as well as other suitable approaches for personalizing a generic advertisement with personalizing information, as will also be appreciated by those skilled in the art. Another example in that with the personalizing information, a photograph or graphic may be tailored to the user **33,** such as in an advertisement for clothing showing a model of the same gender, age group, size, etc.

An advantage of storing the personalizing information in a database **38** within the protected computer network **36** is that this information may be kept private and inaccessible to the advertising server. That is, this approach advantageously addresses the technical problem of how to allow advertisers to achieve personalized advertisements to a known demographic of users, while at the same time providing privacy to users by not disseminating their personal or private information beyond the trusted confines of the protected computing environment **36.**

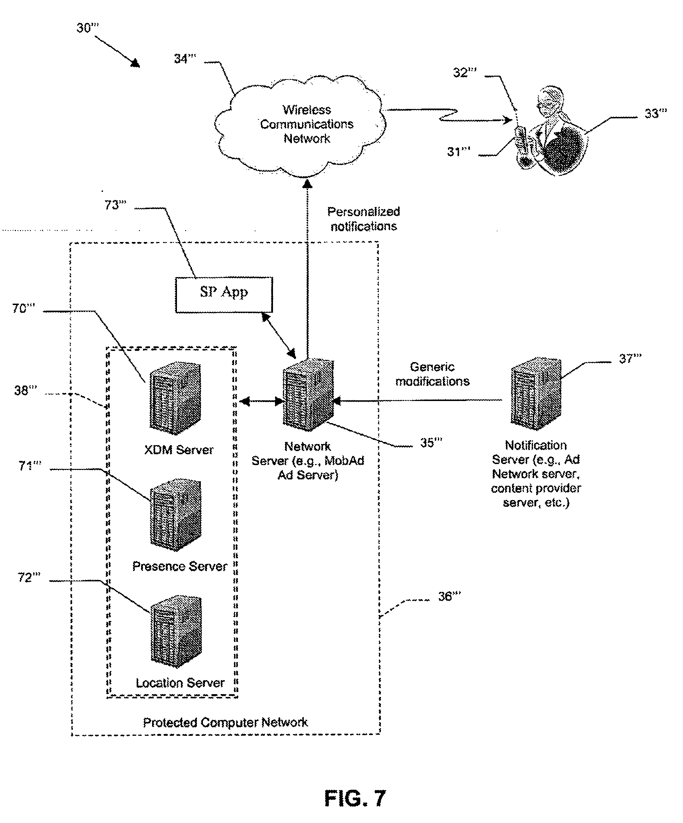

Referring additionally to FIG. 7, in some embodiments, the system **30** may advantageously be implemented in accordance with the Open Mobile Alliance (OMA) Mobile Advertising Requirements (see OMA-RD-Mobile-Advertising-V1_0-20080805-C, 2008 Open Mobile Alliance Ltd., Candidate Version 1.0, available at http://www.openmobilealliance.org/Technical/relase_program /mobad_v1_0.aspx). In accordance with the OMA Mobad specification, the notification server **37"'** may be implemented as an advertiser server or Ad Network server, content provider server, etc., that will provide generic notifications to the network server **35''',** as will be appreciated by those skilled in the art. Moreover, in the context of OMA MobAd specification, the network server **35'''** may be implemented as a MobAd Ad Server, as will also be appreciated by those skilled in the art. In this regard, the MobAd Ad Server **35'''** may access personalized information of users from a series of data repositories **38'''** including, for example, one or more of an extensible markup language (XML) document management (XDM) server **70''',** presence server **71''',** location server **72''',** etc. The MobAd Ad Server **35'''** may then personalize the generic notification while maintaining the user's privacy, and send the personalized notification to the device **31'''.**

Still within the context of the CMA MobAd specification, generic notifications received by the MobAd Ad Server **35'''** may be passed to a service provider Application (i.e., SP App) **73'''** without being personalized. The SP App **73'''** is an application running in the same protected network as the MobAd Ad Server **35'''** and may have its own personalized information about the user. In that case the generic notifications are personalized by the SP App **73'''** in the protected computer network **36'''** before being sent to the user. Generally speaking, the network (or MobAd Ad) server **35'''** may be the main receiver of generic notifications, and may dispatch such generic notifications to various specific application servers running in the same protected computer network **36''',** which will personalize the generic notifications before sending them to the device **31'''.**

In the example of FIG. 3, the system **30'** illustratively includes a firewall module **39',** which again may be implemented using a combination of hardware and software components, that defines the protected computer network **36',** as will be appreciated by those skilled in the art. That is, the network server **35'** and database **38'** are illustratively insulated or protected from external networks, such as wide area networks **40'** like the Internet, through which the network server **35'** and the advertising server **37'** may communicate. As a result, since users know that their personal or private information is being maintained within a secure environment and not disclosed to advertisers, they may be more readily willing to participate in an advertising program where advertisements are delivered to their mobile devices 31 based upon this information. Other suitable approaches for protecting or securing user data so that it is inaccessible by the advertising server **37'** or other outside sources in addition to, or instead or, the firewall module **39'** may also be used in some embodiments, as will be appreciated by those skilled in the art.

As noted above, the network server **35'** may further store advertising preferences within the protected computer network **36'** (e.g., within the database **38'**). These advertising preferences may then be used to filter the generic advertisements, so that undesirable or impermissible advertisements are not sent to the devices **31a' - 31n'.** If the advertising preferences are user advertising preferences, that is, preferences set by or specific to individual users, then the network server **35'** may advantageously filter or exclude advertisements of a type that the user does not wish to receive. For example, a user who is dieting may not want to receive advertisements for food, desserts, or restaurants. As such, key word or category based filters may be set so that any advertisements provided to the network server **35'** that meet the defined criteria will be filtered out and not converted to personal advertisements for, nor sent to, the respective user device **31'.**

In addition to, or instead of, user advertising preferences, network advertising preferences may also be stored that apply to all or different subsets of network users. By way of example, if the protected computer network **36'** is implemented as a company or corporate computer network, then network advertising preferences may be stored to set corporate-wide advertising policies for filtering the generic advertisements, at Block **65'.** For example, a given corporation may exclude any advertisements from being sent to company employees from a competing corporation.

In a corporate implementation, the corporation may establish an account with a third party advertising service to provide advertisements for distribution to corporate users via the advertising server **37'.** This may be done in exchange for monetary consideration to the corporation, for example. Another potential implementation is that the protected computer network **36'** is an Internet service provider (ISP), and clients are provided Internet access for a reduced (or no) fee in exchange for agreeing to receive the advertisements on their registered mobile devices.

One exemplary approach for implementing the systems **30** or **30'** in a corporate setting is through an enterprise server, such as the BlackBerry^{®} Enterprise Server (BES) from the present Assignee Research In Motion, Ltd. In particular, a BES generally comprises a wireless platform for wireless email, Personal information Management (PIM), instant messaging (IM) and other corporate data. A network server **35',** such as a BES, may advantageously reconcile email messages between respective email inbox (or other email boxes) on the wireless communications device **31a' - 31n'** and corresponding email inboxes within the protected computer network **36',** at Block **66',** as will be appreciated by those skilled in the art.

The foregoing filtering or personalized advertisement features, or both, may advantageously be incorporated as part of such a corporate BES implementation, as will be appreciated by those skilled in the art. Moreover, a similar home BES implementation (or other suitable implementation) may also be used for a home network implementation. In such an application, personalized advertisements may be sent to multiple members in a family, with user advertising preferences or network advertising preferences, or both (or no filtering preferences).

A server such as a BES may or may not locally store information such as GPS data, browser history, browser bookmarks, or WiFi network data, for example. In an exemplary implementation, the BES includes MDS and other servers including Mobile Voice Services which locally maintain such information. Such a server may be able to tie into other servers/databases as appropriate to extract the information as needed. Both single and distributed server scenarios may be used. That is, in some implementations the information may be included as part of a single server box, and other implementations may include distributed servers to which the BES has access, as will be appreciated by those skilled in the art.

In accordance with another advantageous feature, the network server **35'** may generate a report of personalized advertisements sent to the mobile wireless communications devices **31a' - 31n',** and send the report to the advertising server **37'** via the wide area network **40'.** This may be particularly appropriate for accounting purposes to determine what monies, etc., are owed if filtering is used and not all of the advertisements being sent to the network server **35'** are in fact being sent to the devices **31a' - 31n'.**

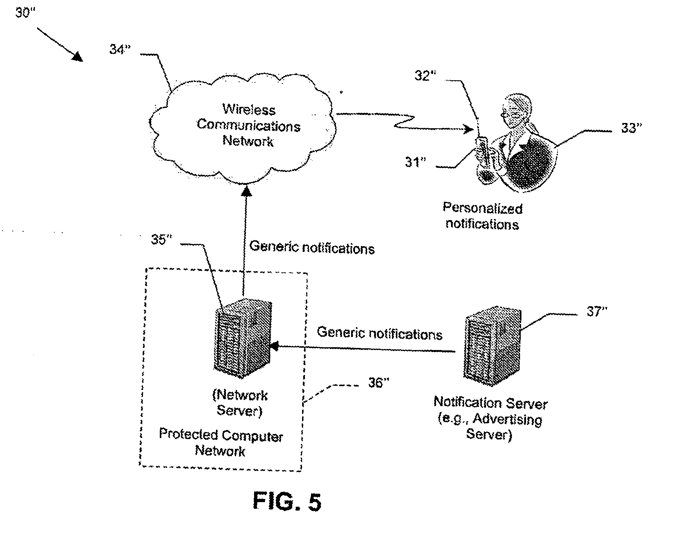

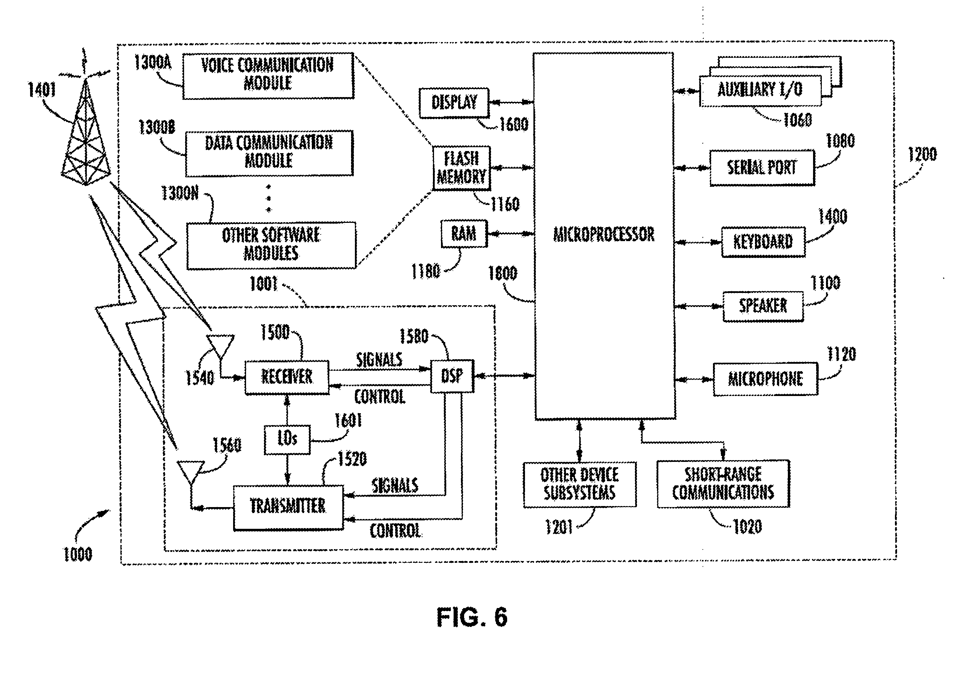

Turning now additionally to FIG. 5, in another exemplary embodiment the notification personalization functions of the network server **35** described above may instead (or in cooperation therewith) be performed by the wireless communications device **31''.** More particularly, the device **31''** may include one or more memories (e.g., a FLASH memory **1160,** RAM memory **1180,** etc., as seen in FIG. 6) for storing the personalizing information, as well as a processor (e.g., the microprocessor **1800** shown in FIG. 6). The processor may therefore advantageously generate personalized notifications based upon generic notifications received through the network server **35''** (or directly from the notification server **37''** in some embodiments) based upon the stored personalizing information and the received generic notifications in the same manner discussed above, as will be appreciated by those skilled in the art.

In the context of the OMA MobAd Specification, the Ad Engine, which is the advertising engine running on the device **31'',** will receive the generic notification and personalize them according to the above-desired method. Alternatively, the Ad Engine may receive the generic notifications and pass them to an Ad App (i.e., an ad aware application). The Ad App will then personalize the notifications according to their respective particular context. For instance, a name field may be replaced by the user name known by that particular Ad App. In some cases this may be a surname, avatar name, networking nickname, etc.

Exemplary components of a mobile wireless communications device **1000** that may be used in accordance with the system **30** are further described in the example below with reference to FIG. 6. The device **1000** illustratively includes a housing **1200,** a keypad **1400** and an output device **1600.** The output device shown is a display **1600,** which may comprise a full graphic LCD. In some embodiments, display **1600** may comprise a touch-sensitive input and output device. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user. In some embodiments, keypad **1400** may comprise a physical keypad or a virtual keypad (e.g., using a touch-sensitive interface) or both.

The housing **1200** may be elongated vertically, or may take on other sizes and shapes (including clamshell housing structures). The keypad **1400** may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display **1600,** along with other input/output devices **1060, 1080, 1100** and **1120;** as well as memory devices **1160**, **1180** and various other device subsystems **1201.** The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of spending and receiving data items via a wireless network **1401.** The PIM data items may be seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the Mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identify module, commonly referred to as a SIM card, in order to operate on a GPRS network.

When required network registration or activation procedures have been completed, the mobile device **1000** may send and receive communications signals over the communication network **1401.** Signal received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allots the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain controls algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, track ball, or some other type of input device. The composed data item may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000**. In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth^{™} communications module to provide for communications with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A communications system (30) comprising:
at least one mobile wireless communications device (31) associated with a respective user (32);
a notification server (37) outside of a protected computer network for generating and sending non personalised generic notifications; and
a network server (35) within the protected computer network (36),
said network server being configured to receive a generic notification sent from said notification server
store, at the network server within the protected computer network, the received generic notification and the personalizing information for the user (33) of said at least one wireless communications device,
adapt, at the network server within the protected computer network, the generic notification based upon the personalizing information to generate a personalized notification, and
send to said at least one wireless communications device the personalized notification.

2. The communications system (30) of Claim 1, wherein the personalizing information comprises a user name, and
wherein said network server (35) is configured to adapt the generic notification by adding the user name to the generic notification.

3. The communications system (30) of Claim 1,
wherein the generic notification has at least one target field therein, and
wherein said network server (35) is configured to adapt the generic notification by filling the personalizing information in the at least one target field.

4. The communications system (30) of Claim 1,
wherein the generic notification has at least one key word therein, and
wherein said network server (35) is configured to adapt the generic notification by replacing the at least one key word with the personalizing information.

5. The communications system (30) of Claim 1,
wherein said network server (35) is configured to store notification preferences within the protected computer network (36), and
wherein said network server is configured to filter the generic notification based upon the notification preferences.

6. The communications system (30) of Claim 5
wherein the notification preferences comprise user notification preferences.

7. The communications system (30) of Claim 5 wherein the notification preferences comprise network notification preferences.

8. The communications system (30) of Claim 5,
wherein said network server (35) is further configured to generate a report of personalized notifications sent to said at least one wireless communications device (31); and
wherein said network server is further configured to send the report to said notification server (37).

9. The communications system (30) of Claim 1 further comprising a computer firewall module connected between the network server (35) and the wide area network to provide the protected computing network.

10. The communications system (30) of Claim 1,
wherein said notification server (37) comprises an advertising server; and
wherein the notifications comprise advertisements.

11. The communications system (30) of Claim 1,
wherein said at least one wireless communications device (31) is also configured for sending and receiving electronic mail "email" messages; and
wherein said network server (35) is further configured to reconcile email messages between an email inbox on said at least one wireless communications device and an email inbox within the protected computer network (36).

12. A communications method comprising:
receiving non-personalised generic notifications sent from a notification server (37) outside of a protected computer network;
storing, at a network server within the protected computer network (36), a received generic notification and personalizing information for a user (330) of at least one wireless communications device (31) within the protected computer network (36); and
adapting, at the network server within the protected computer network (36), the generic notification based upon the personalizing information thereby generating a personalized notification; and
sending to the at least one wireless communications device the personalized notification.

13. The method of Claim 12,
wherein the personalizing information comprises a user name; and
wherein adapting comprises adding the user name to the generic notification.

14. The method of Claim 12,
wherein the generic notification has at least one target field therein; and
wherein adapting comprises filling the personalizing information in the at least one target field.

15. The method of Claim 12,
wherein the generic notification has at least one key word therein; and
wherein adapting comprises replacing the at least one key word with the personalizing information.

## Patentansprüche

1. Kommunikationssystem (30), das aufweist:
zumindest eine mobile drahtlose Kommunikationsvorrichtung (31), die zu einem jeweiligen Benutzer (32) gehört;
einen Benachrichtigungsserver (37) außerhalb eines geschützten Computernetzwerks zum Erzeugen und Senden von nicht-personalisierten generischen Benachrichtigungen; und
einen Netzwerkserver (35) innerhalb des geschützten Computernetzwerks (36),
wobei der Netzwerkserver konfiguriert ist, eine generische Benachrichtigung zu empfangen, die von dem Benachrichtigungsserver gesendet wird,
an dem Netzwerkserver in dem geschützten Computernetzwerk die empfangene generische Benachrichtigung und die
Personalisierungsinformation für den Benutzer (33) der zumindest einen drahtlosen Kommunikationsvorrichtung zu speichern,
an dem Netzwerkserver in dem geschützten Computernetzwerk die generische Benachrichtigung basierend auf der
Personalisierungsinformation anzupassen, um eine personalisierte Benachrichtigung zu erzeugen, und
an die zumindest eine drahtlose Kommunikationsvorrichtung die personalisierte Benachrichtigung zu senden.

2. Kommunikationssystem (30) gemäß Anspruch 1,
wobei die Personalisierungsinformation einen Benutzernamen aufweist, und
wobei der Netzwerkserver (35) konfiguriert ist, die generische Benachrichtigung anzupassen durch Hinzufügen des Benutzernamens zu der generischen Benachrichtigung.

3. Kommunikationssystem (30) gemäß Anspruch 1,
wobei die generische Benachrichtigung zumindest ein Ziel-Feld darin hat, und
wobei der Netzwerkserver (35) konfiguriert ist, die generische Benachrichtigung anzupassen durch Eingeben der Personalisierungsinformation in das zumindest eine Ziel-Feld.

4. Kommunikationssystem (30) gemäß Anspruch 1,
wobei die generische Benachrichtigung zumindest ein Schlüsselwort darin hat, und
wobei der Netzwerkserver (35) konfiguriert ist, die generische Benachrichtigung anzupassen durch Ersetzen des zumindest einen Schlüsselworts mit der Personalisierungsinformation.

5. Kommunikationssystem (30) gemäß Anspruch 1,
wobei der Netzwerkserver (35) konfiguriert ist, Benachrichtigungspräferenzen in dem geschützten Computernetzwerk (36) zu speichern, und
wobei der Netzwerkserver konfiguriert ist, die generische Benachrichtigung basierend auf den Benachrichtigungspräferenzen zu filtern.

6. Kommunikationssystem (30) gemäß Anspruch 5, wobei die Benachrichtigungspräferenzen Benutzer-Benachrichtigungspräferenzen aufweisen.

7. Kommunikationssystem (30) gemäß Anspruch 5, wobei die Benachrichtigungspräferenzen Netzwerk-Benachrichtigungspräferenzen aufweisen.

8. Kommunikationssystem (30) gemäß Anspruch 5,
wobei der Netzwerkserver (35) weiter konfiguriert ist, einen Bericht von personalisierten Benachrichtigungen zu erzeugen, die an die zumindest eine drahtlose Kommunikationsvorrichtung (31) gesendet werden; und wobei der Netzwerkserver weiter konfiguriert ist, den Bericht an den Benachrichtigungsserver (37) zu senden.

9. Kommunikationssystem (30) gemäß Anspruch 1, das weiter ein Computer-Firewall-Modul aufweist, das zwischen dem Netzwerkserver (35) und dem Weitbereichsnetzwerk verbunden ist, um das geschützte Computernetzwerk vorzusehen.

10. Kommunikationssystem (30) gemäß Anspruch 1, wobei der Benachrichtigungsserver (37) einen Werbungs-Server aufweist; und wobei die Benachrichtigungen Werbeanzeigen aufweisen.

11. Kommunikationssystem (30) gemäß Anspruch 1,
wobei die zumindest eine drahtlose Kommunikationsvorrichtung (31) auch konfiguriert ist zum Senden und Empfangen von "elektronische Mail (Email)"-Nachrichten; und
wobei der Netzwerkserver (35) weiter konfiguriert ist, Email-Nachrichten zwischen einer Email-Inbox an der zumindest einen drahtlosen Kommunikationsvorrichtung und einer Email-Inbox in dem geschützten Computernetzwerk (36) abzugleichen.

12. Kommunikationsverfahren, das aufweist:
Empfangen von nicht-personalisierten generischen Benachrichtigungen, die von einem Benachrichtigungsserver (37) außerhalb eines geschützten Computernetzwerks gesendet werden;
Speichern, an einem Netzwerkserver in dem geschützten Computernetzwerk (36), einer empfangenen generischen Benachrichtigung und von Personalisierungsinformation für einen Benutzer (330) zumindest einer drahtlosen Kommunikationsvorrichtung (31) in dem geschützten Computernetzwerk (36);
und
Anpassen, an dem Netzwerkserver in dem geschützten Computernetzwerk (36), der generischen Benachrichtigung basierend auf der Personalisierungsinformation, dadurch Erzeugen einer personalisierten Benachrichtigung; und
Senden der personalisierten Benachrichtigung an die zumindest eine drahtlose Kommunikationsvorrichtung.

13. Verfahren gemäß Anspruch 12,
wobei die Personalisierungsinformation einen Benutzernamen aufweist; und
wobei das Anpassen ein Hinzufügen des Benutzernamens zu der generischen Benachrichtigung aufweist.

14. Verfahren gemäß Anspruch 12,
wobei die generische Benachrichtigung zumindest ein Ziel-Feld darin hat; und
wobei das Anpassen ein Eingeben der Personalisierungsinformation in das zumindest eine Ziel-Feld aufweist.

15. Verfahren gemäß Anspruch 12,
wobei die generische Benachrichtigung zumindest ein Schlüsselwort darin hat; und
wobei das Anpassen ein Ersetzen des zumindest einen Schlüsselworts mit der Personalisierungsinformation aufweist.

## Revendications

1. Système de communication (30) comprenant :
au moins un dispositif de communication mobile sans fil (31), associé à un utilisateur respectif (32) ;
un serveur de notifications (37), à l'extérieur d'un réseau d'ordinateurs protégé, destiné à produire et envoyer des notifications génériques non personnalisées ; et
un serveur de réseau (35), à l'intérieur du réseau d'ordinateurs protégé (36) ;
ledit serveur de réseau étant configuré :
pour recevoir une notification générique envoyée par ledit serveur de notifications ;
pour stocker, sur le serveur de réseau à l'intérieur du réseau d'ordinateurs protégé, la notification générique reçue et des informations de personnalisation pour l'utilisateur (33) dudit au moins un dispositif de communication mobile sans fil ;
pour adapter, sur le serveur de réseau à l'intérieur du réseau d'ordinateurs protégé, la notification générique sur la base des informations de personnalisation, afin de produire une notification personnalisée ; et
pour envoyer la notification personnalisée audit au moins un dispositif de communication mobile sans fil.

2. Système de communication (30) selon la revendication 1, dans lequel les informations de personnalisation comprennent un nom d'utilisateur ; et
dans lequel ledit serveur de réseau (35) est configuré pour adapter la notification générique en ajoutant le nom d'utilisateur à la notification générique.

3. Système de communication (30) selon la revendication 1, dans lequel la notification générique comprend au moins une zone de destinataire ; et
dans lequel ledit serveur de réseau (35) est configuré pour adapter la notification générique en plaçant les informations de personnalisation dans ladite au moins une zone de destinataire.

4. Système de communication (30) selon la revendication 1, dans lequel la notification générique comprend au moins un mot-clef ; et
dans lequel ledit serveur de réseau (35) est configuré pour adapter la notification générique en remplaçant ledit au moins un mot-clef par les informations de personnalisation.

5. Système de communication (30) selon la revendication 1, dans lequel ledit serveur de réseau (35) est configuré pour stocker des préférences de notification à l'intérieur du réseau d'ordinateurs protégé (36) ; et
dans lequel ledit serveur de réseau est configuré pour filtrer la notification générique sur la base des préférences de notification.

6. Système de communication (30) selon la revendication 5, dans lequel les préférences de notification comprennent des préférences de notification d'utilisateur.

7. Système de communication (30) selon la revendication 5, dans lequel les préférences de notification comprennent des préférences de notification de réseau.

8. Système de communication (30) selon la revendication 5, dans lequel ledit serveur de réseau (35) est en outre configuré pour produire un rapport sur les notifications personnalisées envoyées audit au moins un dispositif de communication mobile sans fil (31) ; et
dans lequel ledit serveur de réseau est en outre configuré pour envoyer le rapport audit serveur de notifications (37).

9. Système de communication (30) selon la revendication 1, comprenant en outre un module de coupe-feu informatique connecté entre le serveur de réseau (35) et le réseau étendu pour former le réseau d'ordinateurs protégé.

10. Système de communication (30) selon la revendication 1, dans lequel ledit serveur de notifications (37) comprend un serveur de publicité ; et
dans lequel les notifications comprennent des publicités.

11. Système de communication (30) selon la revendication 1, dans lequel ledit au moins un dispositif de communication mobile sans fil (31) est en outre configuré pour envoyer et recevoir des messages de courrier électronique, « courriel » ; et
dans lequel ledit serveur de réseau (35) est en outre configuré pour synchroniser des messages de courriel entre une boîte de réception de courriel sur ledit au moins un dispositif de communication mobile sans fil et une boîte de réception de courriel au sein du réseau d'ordinateurs protégé (36).

12. Procédé de communication, comprenant les étapes consistant à :
recevoir des notifications génériques, non personnalisées, envoyées par un serveur de notifications (37) situé à l'extérieur d'un réseau d'ordinateurs protégé ;
stocker, sur un serveur de réseau à l'intérieur du réseau d'ordinateurs protégé (36), une notification générique reçue et des informations de personnalisation pour un utilisateur (330) d'au moins un dispositif de communication mobile sans fil (31) au sein du réseau d'ordinateurs protégé (36) ;
adapter la notification générique, sur le serveur de réseau à l'intérieur du réseau d'ordinateurs protégé (36), sur la base des informations de personnalisation, et ainsi produire une notification personnalisée ; et
envoyer la notification personnalisée audit au moins un dispositif de communication mobile sans fil.

13. Procédé selon la revendication 12,
dans lequel les informations de personnalisation comprennent un nom d'utilisateur ; et
dans lequel l'étape d'adaptation comprend l'addition du nom d'utilisateur à la notification générique.

14. Procédé selon la revendication 12,
dans lequel la notification générique comprend au moins une zone de destinataire ; et
dans lequel l'étape d'adaptation comprend le placement des informations de personnalisation dans ladite au moins une zone de destinataire.

15. Procédé selon la revendication 12,
dans lequel la notification générique comprend au moins un mot-clef ; et
dans lequel l'étape d'adaptation comprend le remplacement dudit au moins un mot-clef par les informations de personnalisation.
